# EUROPÄISCHE PATENTANMELDUNG

(11) **EP 2 676 986 A1**
(43) Veröffentlichungstag der Anmeldung: **25.12.2013**
(21) Anmeldenummer: 13169618.9
(22) Anmeldetag: 29.05.2013
(51) Int. Cl.: C08G 65/336

(54) **Siliconpolyether und Verfahren zu deren Herstellung aus Methylidengruppen tragenden Polyethern**

(30) Priorität: 22.06.2012 DE 102012210553
(71) Anmelder: Evonik Industries AG, 45128 Essen (DE)
(72) Erfinder: Schubert, Frank, 47506 Neukirchen-Vluyn (DE); Ferenz, Michael, 45147 Essen (DE); Knott, Wilfried, 45355 Essen (DE)

(57) **Zusammenfassung**

Die Erfindung betrifft Siliconpolyether und ein Verfahren zu deren Herstellung, bei dem mit Methylidengruppen seitenständig modifizierte Polyether mit Wasserstoffsiloxanen in einer Hydrosilylierungsreaktion umgesetzt werden.

## Beschreibung

Die Erfindung betrifft Siliconpolyether und ein Verfahren zu deren Herstellung, bei dem mit Methylidengruppen seitenständig modifizierte Polyether mit Wasserstoffsiloxanen in einer Hydrosilylierungsreaktion umgesetzt werden.

Die erfindungsgemäßen Verbindungen stellen eine neue Klasse von Siliconpolyethern dar, bei denen die Anbindung des Siloxankörpers an den Polyether über hydrolysestabile SiC-Bindungen stattfindet. Die neuartigen Verbindungen werden im Weiteren als Siliconpolyether bezeichnet, auch wenn die Struktur gegebenenfalls nicht die Merkmale eines polymeren Ethers und/oder eines Silicons im üblichen Sinn umfasst. Für den Fachmann ist jedoch die strukturelle Übereinstimmung von Polyetherstrukturelementen und Siliconen mit denen der neuartigen Verbindungen deutlich und klar ersichtlich.

Im Rahmen dieser Erfindung umfasst der Begriff Polyether sowohl Polyether, Polyetherole und auch Polyetheralkohole, die gegebenenfalls synonym zueinander verwendet werden. Dabei ist nicht erforderlich, dass der Ausdruck "poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog der OECD- oder REACH-Richtlinien zu genügen scheinen.

Siliconpolyether sind vielseitig verwendbar, da man ihre Eigenschaften, insbesondere ihre Hydrophil/Hydrophob-Balance durch geeignete Wahl des Siloxanblockes oder der Siloxanblöcke einerseits und durch geeigneten Aufbau des Polyetherblockes oder der Polyetherblöcke beeinflussen und auf den gewünschten Wert einstellen kann.

Bei den Siliconpolyethern unterscheidet man prinzipiell zwischen SiOC- bzw. SiC-verknüpften Systemen. Während die hydrolyselabilen SiOC-verknüpften Systeme durch Reaktion von hydroxyfunktionellen Polyethern mit Chlorsiloxanen oder Alkoxysiloxanen herstellbar sind, werden die SiC-verknüpften Systeme insbesondere durch die edelmetallkatalysierte Hydrosilylierung von meist einfach ungesättigten Polyethern mit Wasserstoffsiloxanen erhalten. Die edelmetallkatalysierte Hydrosilylierung von Allylpolyethern steht in Konkurrenz zu der Allyl-Propenylumlagerung. Diese Nebenreaktion ist nicht nur deshalb unerwünscht, weil sie den Einsatz von überschüssigem Polyether erfordert und damit eine Produktverdünnung einhergeht, sondern der hydrolytische Abbau der Propenylpolyether führt zur Bildung von Propionaldehyd, der dem Produkt unter Anderem einen unangenehmen Geruch verleiht.

Durch die Verwendung nicht isomerisierbarer, terminal ungesättigter Polyether wird nach den in US 3,957,843 und US 4,059,605 offenbarten Verfahren versucht, die Entstehung von Propenylpolyethern in der Hydrosilylierung zu vermeiden. So werden z.B. Polyether eingesetzt, die die Endgruppe CH₂=CH-C(CH₃)₂-O aufweisen. Aus der US 3,507,923 sind Methallylgruppen tragende Polyether bekannt, die unter den Bedingungen der Hydrosilylierung nur eine geringe Tendenz zur Isomerisierung zeigen. Um Zugang zu hochmolekularen, linearen Siliconpolyether-Copolymeren zu erlangen, werden gemäß US 4,150,048 in einer Hydrosilylierungsreaktion zweifach SiH-funktionelle Siloxane mit zweifach das Strukturelement CH₂=C(Alkyl)-CH₂-O enthaltenden, kaum isomerisierenden Polyethern umgesetzt. Der Einsatz von Allylpolyethern führt im Vergleich dazu infolge der Propenylumlagerungen verstärkt zu Kettenabbrüchen und weniger langkettigen Copolymeren. Siliconpolyether, die praktisch frei von ungewünschten Propenylgruppen tragenden Polyethern sind, werden auch in US 4,160,775 offenbart. Auch das darin beschriebene Verfahren beruht auf der Verwendung bestimmter alkylallyl-terminierter Polyether mit geringer Isomerisierungsneigung.

Die US 4,962,218 und US 5,045,571 (EP0368195B1) beschreiben sogenannte inverse Siliconpolyether, die im Gegensatz zu den geläufigen Strukturen mit einem zentralen Silicongerüst einen mehrfach ungesättigten Polyether als zentrales Gerüst aufweist, welcher im zweiten Schritt durch Hydrosilylierung mit monofunktionellen Wasserstoffsiloxanen modifiziert wird. Der mehrfach ungesättigte Polyether wird mittels Alkoxylierung von Alkylenoxiden im Gemisch mit olefinisch ungesättigten Epoxiden, wie beispielsweise Allylglycidylether hergestellt. Das olefinische Epoxid kann statistisch verteilt oder blockweise in die Polyetherkette eingefügt werden, die bei alkalischer Katalyse üblicherweise bis zu einer Kettenlänge und damit Molmasse von etwa 4000 g/mol aufgebaut werden kann. Zwar beansprucht die EP 0 368 195 B1 einen Molgewichtsbereich von 650 g/mol bis 20000 g/mol, explizit offenbart werden jedoch lediglich Polyether mit Molgewichten (bestimmt mittels GPC) von 1020 g/mol bis 1640 g/mol. Je nach Reaktionstemperaturen und Katalysatorkonzentrationen können die allylischen Doppelbindungen bereits während der alkalischen Alkoxylierung zu Propenylethern isomerisieren. Die allylischen Doppelbindungsanteile des so hergestellten mehrfach ungesättigten Polyethers können im Anschluss durch edelmetallkatalysierte Hydrosilylierung mit destillativ aufgereinigten SiH-funktionellen Silanen oder Siloxanen umgesetzt werden. Ein Vorteil der Lehre der EP 0 368 195 besteht darin, dass die Produkte nicht durch überschüssigen Propenylpolyether verdünnt werden. Die erhöhte Produktreinheit dieser inversen Polyethersiloxane wird in der EP 0 368 195 anhand von Gelpermeationschromatogrammen offenbart. Dennoch konzediert die EP 0 368 195, dass bei der Hydrosilylierung der mehrfach ungesättigten Polyether nur weniger als 90 mol-% der Allylgruppen umgesetzt werden und dass die verbleibenden ungesättigten Gruppen in Form von hydrolyselabilen Propenylfunktionen vorliegen. Das Problem der Geruchsbehaftung durch die hydrolytische Freisetzung von Propionaldehyd ist somit nicht gelöst. Wie dem Fachmann bekannt ist, führt bereits die Lagerung eines propenylhaltigen Polyethersiloxans bei Raumtemperatur zu Molmassenaufbau und Geruchsbildung. Um die Lagerstabilität zu verbessern und die Geruchsbehaftung zu vermeiden, offenbart der Stand der Technik diverse Desodorierverfahren, welche als zusätzlicher Verfahrensschritt die Kosten in die Höhe treiben und nicht kausal die Bildung von Propionaldehyd verhindern.

Die EP 0 506 086 A1 (US 5,110,970) beschreibt die Herstellung von inversen Siliconpolyether-Copolymeren in einem zweistufigen Verfahren. Im ersten Schritt wird ein mehrfach ungesättigter Polyether mit Triethoxysilan hydrosilyliert. Der erhaltene alkoxysilylfunktionelle Polyether wird dann unter hydrolytischen Bedingungen mit Trimethylchlorsilan unter Ausgasung von Chlorwasserstoff umgesetzt. Auch gemäß der Lehre der EP 0 506 086 A1 (US 5,110,970) werden nur 85 mol-% der Allylgruppen hydrosilyliert. Im Vergleich zu einer einstufigen Hydrosilylierung von ((CH₃)₃SiO)₃SiH, kurz M3T genannt, an mehrfach ungesättigte Polyether bietet das zweistufige Verfahren über die Zwischenstufe des alkoxysilylfunktionellen Polyethers zwar höhere Gesamtausbeuten, jedoch sind in der Hydrosilylierstufe zur Lehre der EP 0 368 195 vergleichbare Ausbeuteverluste durch die Allyl-Propenylumlagerung zu verzeichnen. Zwar mag die Geruchsbehaftung des Endprodukts durch die hydrolytischen Bedingungen der zweiten Stufe und die destillative Aufarbeitung reduziert sein, dennoch handelt es sich hier nicht um eine hochselektive Reaktion.

In EP2289961 (US 2011/0046305) werden vollkommen propenylfreie inverse Siliconpolyether offenbart, die durch bevorzugt säurekatalysierte hydrolytische Umsetzung von alkoxysilylfunktionellen Polyethern mit reaktiven Alkoxysilanen gewonnen werden. Durch Verwendung der selektiven Doppelmetallcyanid (DMC)-Katalyse in der Alkoxylierungsstufe wird erreicht, dass der als Vorstufe eingesetzte alkoxysilylfunktionelle Polyether frei von unerwünschten Propenyleinheiten ist. Die Neigung der Alkoxysilylgruppen zur Selbstkondensation und Vernetzung unter den Bedingungen der sauer katalysierten Weiterreaktion mit Alkoxysilanen erfordert die genaue Einhaltung bestimmter Reaktionsbedingungen wie Säuregehalt, Temperatur, Reaktionszeit und Verdünnung und schränkt die Zugänglichkeit zu den inversen Siliconpolyetherstrukturen ein.

Die Aufgabe der vorliegenden Erfindung besteht somit in der Bereitstellung von neuartigen Polyether-Silicon-Verbindungen, die zumindest einen Nachteil des Standes der Technik nicht aufweisen.

Im Umfang dieser Erfindung werden unter dem Begriff Polyether-Silicon-Verbindung sowie unter dem Begriff Silicon-Molekülteil Verbindungen umfasst, die nur ein Siliziumatom enthalten. Silicon-Molekülteile der Formel (1) sind damit im Stand der Technik als Silane bekannt.

### Beschreibung der Erfindung

Überraschenderweise wurde gefunden, dass die erfindungsgemäßen Polyether-Silicon-Verbindungen wie in den Ansprüchen beschrieben die Aufgabe der vorliegenden Erfindung erfüllen.

Gegenstand der vorliegenden Erfindung sind Polyether-Silicon-Verbindungen, welche zwischen Polyether-Backbone und einem Siliziumatom nur eine Methylengruppe aufweisen.

Gegenstand der vorliegenden Erfindung ist weiterhin ein Verfahren zur Herstellung von Polyether-Silicon-Verbindungen, die mindestens ein Strukturelement der Formel (1) enthalten.

Ein weiterer Gegenstand der vorliegenden Erfindung ist die Verwendung der erfindungsgemäßen Polyether-Silicon-Verbindungen sowie die Produkte des erfindungsgemäßen Verfahrens.

Gegenstand der Erfindung sind weiterhin Zusammensetzungen enthaltend mindestens eine Komponente bestehend aus mindestens einer erfindungsgemäßen Polyether-Silicon-Verbindung.

Vorzugsweise sind die erfindungsgemäßen Polyether-Silicon-Verbindungen, die mindestens ein Strukturelement der Formel (1) 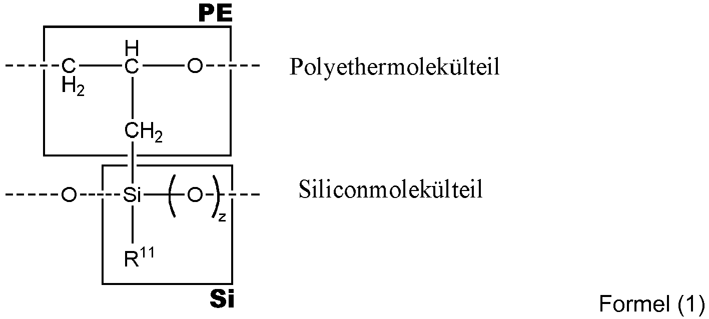 enthalten, wobei der Polyether-Molekülteil durch Formel (2) beschrieben wird

A-[O-(R¹)ₙ-(R²)ₒ-(R³)ₚ-(R⁴)ₘ₁-(R⁵)ₘ₂-(R⁶)ₘ₃-(R⁷)ₘ₄- R⁸]ₐ₁ Formel (2)

a1 gleich 1 bis 8, bevorzugt größer 1 bis 4 ist, besonders bevorzugt 2 bis kleiner 4,
A entweder Wasserstoff oder ein organischer Rest einer organischen Startverbindung, die mindestens ein Kohlenstoffatom aufweist,
(a1 * n) gleich 0 bis 200, bevorzugt größer als 0 bis 150, besonders bevorzugt 1 bis 100 ist,
(a1 * o) gleich 1 bis 1000, bevorzugt größer als 1 bis 800, mehr bevorzugt 5 bis 600, besonders bevorzugt 8 bis 500, mehr besonders bevorzugt 10 bis 400 und insbesondere bevorzugt 30 bis 100 ist,
(a1 * p) gleich 0 bis 150, bevorzugt größer 0 bis 200, besonders bevorzugt 1 bis 100 ist.
(a1 * m1) gleich kleiner 50, bevorzugt kleiner 20, weiter bevorzugt kleiner 10, besonders bevorzugt kleiner als 5, insbesondere 0 bis kleiner als 1 ist
(a1 * m2) gleich kleiner 50, bevorzugt kleiner 20, weiter bevorzugt kleiner 10, besonders bevorzugt kleiner als 5, insbesondere 0 bis kleiner als 1 ist,
(a1 * m3) gleich kleiner 30, bevorzugt kleiner 20, weiter bevorzugt kleiner 10, besonders bevorzugt kleiner als 5, insbesondere 0 bis kleiner als 1 ist,
(a1 * m4) gleich 1 bis 50, bevorzugt größer als 1 bis 20, besonders bevorzugt größer als 2 bis 10, insbesondere bevorzugt größer 3 bis 5 ist,
mit der Maßgabe, dass
die Summe der Indexprodukte a1 * (n + o + p + m1 + m2 + m3 + m4) mindestens gleich 3 ist, und die Einheiten mit den Indices n, o., p, m1, m2, m3 und m4 untereinander in beliebiger Reihenfolge frei angeordnet sein können,
R¹ = -CH₂CH₂O-
R² = -CH₂CH(CH₃)O- oder -CH(CH₃)CH₂O-
R³ = -CH₂CHRO- oder -CHRCH₂O-
R⁴ = -CH₂CH(CH₂OH)O- oder -CH(CH₂OH)CH₂O-
R⁵ = -CH₂CH(CH₂Cl)O- oder -CH(CH₂Cl)CHO-
R⁶ = -CH₂C(=CH₂)O- oder -C(=CH₂)CH₂O-
R⁷ = ein Strukturelement der Formel (1), bestehend aus dem Molekülteil enthaltend die Atome des Kastens mit dem Zeichen PE
R⁸ = unabhängig voneinander Wasserstoff oder eine Alkylgruppe mit 1-18 C-Atomen oder eine Gruppe R-C(=O)- ist,
R unabhängig voneinander entweder eine Alkylgruppe mit 1-18 C-Atomen oder ein aromatischer Rest, insbesondere eine Methylgruppe, eine Ethylgruppe oder ein Phenylrest ist,
wobei der Silicon-Molekülteil durch Formel (3) oder Formel (4) beschrieben wird,

Mₐ M^{H}_{b} M^{PE}_{c} Dd D^{H}ₑ D^{PE}_{f} Tg Qₕ Formel (3)

wobei
a eine Zahl von 0 bis 42, bevorzugt von größer 0 bis 22, besonders bevorzugt von 1 bis 3, insbesondere bevorzugt größer als 1 bis kleiner als 2,
b eine Zahl von 0 bis 20, bevorzugt von größer als 0 bis 10, besonders bevorzugt von 1 bis 3, insbesondere bevorzugt größer als 1 bis kleiner als 2,
c eine Zahl von 0 bis 42, bevorzugt von größer als 0 bis 22, besonders bevorzugt von 1 bis bis 10, insbesondere bevorzugt größer als 1 bis kleiner als 3,
d eine Zahl von 0 bis 500, bevorzugt größer als 0 bis 300, besonders bevorzugt von 1 bis 200, insbesondere bevorzugt größer als 1 bis 100,
e eine Zahl von 0 bis 100, bevorzugt größer als 0 bis 50, mehr bevorzugt von 1 bis 20, weiter mehr bevorzugt größer als 1 bis 10, besonders bevorzugt von 2 bis 5, insbesondere bevorzugt größer 2 bis 3,
f eine Zahl von 0 bis 50, bevorzugt von größer 0 bis 25, besonders bevorzugt von 1 bis 10,
g eine Zahl von 0 bis 50, bevorzugt von größer 0 bis 25, mehr bevorzugt von 1 bis 10, besonders bevorzugt von größer 1 bis 6, insbesondere bevorzugt von 2 bis kleiner oder gleich 3,
h eine Zahl von 0 bis 50, bevorzugt von größer 0 bis 25, mehr bevorzugt von 1 bis 10, besonders bevorzugt von größer 1 bis 6, insbesondere bevorzugt von 2 bis kleiner oder gleich 3,
z unabhängig voneinander gleich 0 oder 1 ist,
mit der Maßgabe, dass a + b + c größer oder gleich 2 ist
und mit der Maßgabe, dass c + f mindestens 1 bis 92, bevorzugt größer 1 bis 20, insbesondere mindestens 2 bis 10,
und mit der Maßgabe, dass die Einheiten mit den Indices b, c., d, e, f, g und h untereinander in beliebiger Reihenfolge frei angeordnet sein können,
und wobei
M dem Strukturelement [R¹¹₃SiO_{1/2}],
M^{H} dem Strukturelement [R¹¹₂SiHO_{1/2}],
M^{PE} ein Strukturelement der Formel (1), bestehend aus dem Molekülteil enthaltend die Atome des Kastens mit dem Zeichen Si, wobei die in Formel (1) freie Valenz, durch die gestrichelt gezeichnete Bindung (zwischen dem Siliziumatom und dem Sauerstoffatom außerhalb des Kastens) dargestellt, mit einem Rest R¹¹ abgesättigt ist,
D dem Strukturelement [R¹¹₂SiO_{2/2}],
D^{H} dem Strukturelement [R¹¹SiHO_{2/2}],
D^{PE} ein Strukturelement der Formel (1), bestehend aus dem Molekülteil enthaltend die Atome des Kastens mit dem Zeichen Si, wobei die in Formel (1) freie Valenz, durch die gestrichelt gezeichnete Bindung (vom Sauerstoffatom mit dem Index z nach außerhalb des Kastens führend) dargestellt, mit einem weiteren Strukturelement der Formel (3) verbunden ist,
T dem Strukturelement [R¹¹SiO_{3/2}],
Q dem Strukturelement [SiO_{4/2}] entspricht,
R¹¹ unabhängig voneinander gleiche oder verschiedene Alkylreste mit 1 bis 30 Kohlenstoffatomen, oder gleiche oder verschiedene Arylreste mit 6 - 30 Kohlenstoffatomen oder -OH oder -OR¹², bevorzugt Methyl, Phenyl, -OH oder -OR¹², ganz besonders bevorzugt eine Methyl- oder Phenylgruppe ist,
R¹² unabhängig voneinander gleiche oder verschiedene Alkylreste mit 1 bis 30 Kohlenstoffatomen, oder gleiche oder verschiedene Arylreste mit 6 - 30 Kohlenstoffatomen darstellt, bevorzugt ein Alkylrest mit 1 bis 8 Kohlenstoffatomen oder ein Phenylrest ist;

R¹¹₃Si - Formel (4)

wobei R¹¹ wie vorstehend definiert ist und die in Formel (4) angegebene Bindung die Bindung zum Polyethermolekülteil darstellt.

Wird der Silicon-Molekülteil durch Formel (4) beschrieben, so sind die in Formel (1) freien Valenzen im Silicon-Molekülteil, dargestellt durch die gestrichelt gezeichneten Bindungen, wobei der Index z gleich null ist, alle unabhängig voneinander mit einem Rest R¹¹ abgesättigt.

Es kann vorteilhaft sein, wenn der Siliconmolekülteil der erfindungsgemäßen Polyether-Silicon-Verbindungen keine Sauerstoffatome aufweist.

Weiterhin kann es vorteilhaft sein, wenn die erfindungsgemäßen Polyether-Silicon-Verbindungen keine Si-H-Gruppen aufweisen.

Weiterhin vorteilhaft sind die erfindungsgemäßen Polyether-Silicon-Verbindungen der vorliegenden Erfindung, da sie keine nachweisbaren Doppelbindungsisomere enthalten. Insbesondere sind die erfindungsgemäßen Polyether-Silicon-Verbindungen frei von Molekülen und/oder Molekülfragmenten, die Propenylgruppen aufweisen oder bilden können.

Vorzugsweise ist der Rest R⁷ der erfindungsgemäßen Polyether-Silicon-Verbindungen nicht endständig.

Die erfindungsgemäßen Verbindungen der Formel (1) weisen eine gewichtsmittlere Molmasse von 200 bis 50000 g/mol, bevorzugt von 800 bis 35000 g/mol und besonders bevorzugt von 1200 bis 25000 g/mol auf.

Ein weiterer Vorteil der erfindungsgemäßen Polyether-Silicon-Verbindungen der vorliegenden Erfindung ist, dass sie keine sogenannten Überschusspolyether enthalten, die in konventionell hergestellten Produkten meist 20-40 Gew.-% des Gesamtprodukts ausmachen. Unter Überschusspolyether werden Polyether verstanden, die nicht an zumindest ein Siliziumatom gebunden sind. Die erfindungemäßen Polyether-Silicon-Verbindungen zeichnen sich somit hinsichtlich des Fehlens freier organischer Polyetheranteile aus. Ihre chemische Zusammensetzung und damit ihre Hydrophil-Hydrophob-Balance sind über die flexible Wahl der Synthesebedingungen in weiten Bereichen steuerbar. So lassen sich die Länge und Anordnung des hydrophoben Siloxankörpers und die des meist hydrophileren Polyetherteils in weiten Bereichen reproduzierbar einstellen. Damit wird ein Nachteil des Standes der Technik überwunden, denn in den Fällen, in denen der Polyether hydrophil eingestellt ist, verleiht der Überschusspolyether dem Endprodukt in tensidischen Anwendungen eine ungewünschte erhöhte Hydrophilie.

Ein weiterer Vorteil der erfindungsgemäßen Polyether-Silicon-Verbindungen der vorliegenden Erfindung ist die Bereitstellung der erfindungsgemäßen Siliconpolyether in Form von lagerstabilen Verbindungen, die frei von störenden Nebenprodukten sind.

Lagerstabilität im Sinne der vorliegenden Erfindung bedeutet, dass die Viskosität des Endproduktes bei Wasserausschluss und Lagerung bei Raumtemperatur nach einem Jahr noch keine signifikante Viskositätszunahme von mehr als 20% des Ausgangswertes aufweist. Dies ist insbesondere für hochmolekulare Produkte mit gewichtsmittleren Molmassen über 10000 g/mol wichtig, da die Ausgangsviskosität dieser Produkte bereits so hoch ist, dass es zur Vergelung nur einer minimalen, spektroskopisch nicht nachweisbaren Menge quervernetzter Ketten bedarf.

Viskositätsaufbau kann beispielsweise bedingt sein durch Vergelung, ausgelöst durch intermolekulare Hydrolyse- und Kondensationsreaktionen oder durch vernetzende Nebenreaktionen in Anwesenheit von Propenylethergruppen.

Die Viskosität kann in Anlehnung an die DIN 53019 mit einem Rotationsviskosimeter, z.B. der Marke Haake RV12 bei 25 °C gemessen werden.

Ein weiterer Vorteil der erfindungsgemäßen Polyether-Silicon-Verbindungen besteht darin, dass keine Nebenreaktionen zur Bildung von Propenylethern führen, die bei Lagerung des Produkts unter Einwirkung von Luftfeuchtigkeit hydrolytisch zersetzt werden. Es wird daher kein Propionaldehyd freigesetzt, der zu einer unerwünschten Geruchsbehaftung des Produkts führen könnte. Damit sind die Produkte nicht nur direkt nach ihrer Herstellung geruchsfrei, sondern sie setzen bei Lagerung zudem keine neuen, unerwünschten Geruchsträger frei.

Weiterhin unterscheiden sich die erfindungsgemäßen Polyether-Silicon-Verbindungen vorteilhaft von den in EP 0368195 A1 (US 5,045,571 und US 4,962,218) und EP 0506086 A1 (US 5,110,970) offenbarten Siliconpolyethern dadurch, dass sie gegebenenfalls neben gebundenen Siloxanylgruppen noch Methylidengruppen einzeln oder im Gemisch enthalten können, an denen polymeranaloge Folgereaktionen vorgenommen werden können.

Die in den angeführten Formeln wiedergegebenen Indexzahlen und die Wertbereiche der angegebenen Indizes verstehen sich als die Mittelwerte der möglichen statistischen Verteilung der tatsächlichen vorhandenen Strukturen und/oder deren Mischungen. Dies gilt auch für als solche an sich exakt wiedergegebene Strukturformeln wie z.B. in Formel (2).

Die verschiedenen Monomereinheiten der Formeln (2), (3), (4), (5), (7) mit den jeweils angegebenen Indizes können statistisch verteilt vorliegen. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können.

Der organische Rest A ist vorzugsweise ein Rest der Verbindung der Formel (6)

A -(OH)ₐ₁ Formel (6)

ohne die OH-Gruppe wobei a1 die oben dafür genannten Werte annehmen kann.

Bevorzugte Strukturen der Formel (6) sind solche, die sich aus Verbindungen der Gruppe der Alkohole, Polyetherole oder Phenole, vorzugsweise aus Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di-und Polypropylenglykol, 1,4-Butandiol, 1,6-Hexandiol, Trimethylolpropan, Glycerin, Pentaerythrit, Sorbit, Mannit, Lactit, Xylit, Threit, Erythrit oder von Naturstoff basierenden, Hydroxylgruppen tragenden Verbindungen, ableiten. Besonders bevorzugt sind Strukturen der Formel (6) wie Butanol, Octanol, Allylalkohol oder Polyetherole, insbesondere bevorzugt sind Butanol, Octanol und Allylalkohol.

Die Reste A weisen vorzugsweise eine numerische Molmasse von 15 bis 4983 g/mol, besonders bevorzugt 83 bis 4983 g/mol und insbesondere bevorzugt 113 bis 4983 g/mol auf.

Die Polyetherole der Formel (6) zeichnen sich durch eine gewichtsmittlere Molmasse von bis zu 8000, vorzugsweise von bis zu 4000, weiterhin vorzugsweise von bis zu 2000 und insbesondere vorzugsweise von bis zu 500 g/mol aus. Weiterhin zeichnen sich die Polyetherole der Formel (6) durch die Polymerisation von Ethylenoxid und /oder Propylenoxid aus, insbesondere durch die Polymerisation von Propylenoxid. Bevorzugt sind die Polyetherole der Formel (6) Butanol gestartet.

Über den Rest A können weitere hydrosilylierbare Kohlenstoff-Kohlenstoff Doppelbindungen eingebracht werden, um den Siloxananteil der erfindungsgemäßen Siliconpolymere zu erhöhen. So kann A ein Rest sein, der ein oder mehrere Allyl- oder Vinylgruppen aufweist. Bevorzugt sind hydrosilylierbare Doppelbindungen aufweisende Reste, deren Doppelbindungen nicht zur Umlagerung neigen. Mehr bevorzugt sind Reste, die Acrylat, Methacrylat und/oder Methallylgruppen aufweisen.

Insbesondere bevorzugt sind die erfindungsgemäßen Polyether-Silicon-Verbindungen, die das Strukturelement der Formel (1) enthalten und die einen Polyether-Molekülteil der Formel (2) enthalten, in dem
a1 gleich 1
A der organische Rest von Octanol oder ein Butanol gestarteter Polyether,
   (a1 * n) gleich 0,
   (a1 * o) gleich 30 bis 100,
   (a1 * p) gleich 0,
   (a1 * m1) gleich 0 bis kleiner 1,
   (a1 * m2) gleich 0 bis kleiner 1,
   (a1 * m3) gleich 0 bis kleiner 1,
   (a1 * m4) gleich 1 bis 5 ist,
   mit der Maßgabe, dass die Summe der Indexprodukte a1 * (n + o + p + m1 + m2 + m3 + m4) mindestens gleich 3 ist,
   die Reste R¹, R², R³, R⁴, R⁵, R⁶, R⁷, R⁸ und R sind wie oben bereits definiert, und wo die Polyether-Silicon-Verbindungen der Formel (1) einen Silicon-Molekülteil der Formel (3) oder Formel (4) enthalten, in dem
   a von 0 bis kleiner 2,
   b von 0 bis kleiner 3,
   c von 0 bis kleiner 3,
   d von 0 bis 100,
   e von 0 bis 2,
   f von 0 bis 10,
   g von 0 bis kleiner 3,
   h von 0 bis kleiner 3,
   z 1 ist,
   mit der Maßgabe, dass a + b + c gleich oder größer 2 ist
   und mit der Maßgabe, dass c + f mindestens 1 bis 10,
   die Reste M, M^{H}_{b}, M^{PE}_{c}, D_{d}, D^{H}ₑ, D^{PE}_{f}, Tg, Qₕ sind wie oben bereits definiert
   R¹¹ Methyl,
   R¹² gleiche oder verschiedene Alkylreste mit 1 bis 8 Kohlenstoffatomen oder Phenylreste sind,
   wobei die Definition für R¹¹ in Formel (4) ebenfalls gültig ist.

Die erfindungsgemäßen Substanzen können auf beliebige Art und Weise dargestellt werden, jedoch ist das im Folgenden beschrieben Verfahren bevorzugt.

Das erfindungsgemäße Verfahren zur Herstellung von Polyether-Silicon-Verbindungen zeichnet sich dadurch aus, dass ein methylidensubstituierter Polyether der Formel (5) mit einer SiH-Verbindung der Formel (7) (Wasserstoffsiloxan) oder der Formel (8) (Wasserstoffsilan) umgesetzt wird. Vorzugsweise wird diese Umsetzung im Sinne einer Hydrosilylierung ausgeführt.

Methylidensubstituierte Polyether der Formel (5) sind,

A-[O-(R¹)ₙ-(R²)ₒ-(R³)ₚ-(R⁴)ₘ₁-(R⁵)ₘ₂-(R⁶)ₘ₅- R⁸]ₐ₁ Formel (5)

wobei
a1, (a1 * n), (a1 * o), (a1 * p), (a1 * m1), (a1 * m2) sowie A, R¹, R², R³, R⁴, R⁵, R⁶ und R⁸ die zuvor definierten Bedeutungen haben, und wobei
(a1 * m5) gleich 1 bis 80, bevorzugt größer als 1 bis 50, weiter bevorzugt gleich 2 bis 30, besonders bevorzugt größer 2 bis kleiner als 20 ist, wobei
A der organische Rest der Verbindung der Formel (6)

A -(OH)ₐ₁ Formel (6)

ohne die OH-Gruppe ist.

Derartige methylidensubstituierte Polyether können nach dem in DE 10 2011 076019 dargestellten Verfahren durch Dehydrochlorierung von chlorierten Polyethern mit Metallhydroxiden oder-alkoholaten hergestellt werden. Diese chlorhaltigen Polyether sind wiederum durch vorherige Doppelmetallcyanid (DMC)-katalysierte Alkoxylierungsreaktion von Epichlorhydrin und evtl. weiteren Epoxiden an einer OH-funktionellen Startverbindung zugänglich und frei von Propenylgruppen.

Die Herstellung der methylidensubstituierten Polyether und die im Rahmen dieser Erfindung einsetzbaren Strukturtypen sind ausführlich in DE 10 2011 076019 beschrieben. Der Inhalt der Beschreibung und der Ansprüche der DE 10 2011 076019 ist hiermit vollumfänglich als Bestandteil dieser Erfindung anzusehen. Die so hergestellten Verbindungen enthalten die modifizierbaren Methylidenfunktionen seitenständig statistisch verteilt.

Die methylidensubstituierten Polyether der Formel (5) sind in der Regel farblose bis gelb-orange Produkte, die klar oder opak sein können. Sie zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden.

Sofern im Umfang dieser Erfindung auf Naturstoffe Bezug genommen wird, z.B. Sorbit, sind grundsätzlich alle Isomeren damit gemeint, bevorzugt sind die jeweils in der Natur vorkommenden Isomere, im hier genannten Falle also das D-Sorbit (CAS RN 50-70-4). Zur Definition von Naturstoffen wird auf den Umfang des "Dictionary of Natural Products", Chapman and Hall/CRC Press, Taylor and Francis Group, z.B. in der online Ausführung von 2011: http://dnp.chemnetbase.com/ verwiesen.

Wo immer Moleküle beziehungsweise Molekülfragmente ein oder mehrere Stereozentren aufweisen oder aufgrund von Symmetrien in Isomere unterschieden werden können oder aufgrund anderer Effekte z.B. eingeschränkter Rotation in Isomere unterschieden werden können, sind alle möglichen Isomere von der vorliegenden Erfindung mit eingeschlossen. Isomere sind dem Fachmann bekannt, in besonderer Weise wird auf die Definitionen von Prof. Kazmaier der Universität des Saarlandes verwiesen.. Insbesondere sind alle Möglichkeiten, die sich aus den stereochemischen Definitionen der Taktizität ergeben eingeschlossen, z.B. isotaktisch, syndiotaktisch, heterotaktisch, hemiisotaktisch, ataktisch. Bevorzugt im Sinne der Erfindung sind Polyether und Polyetherfragmente mit zumindest teilweiser ataktischer Substituentenfolge.

Das erfindungsgemäße Verfahren zeichnet sich dadurch aus, dass ein methylidensubstituierter Polyether der Formel (5) mit einer SiH-Verbindung der Formel (7) (Wasserstoffsiloxan) oder der Formel (8) (Wasserstoffsilan) umgesetzt wird. Vorzugsweise wird diese Umsetzung im Sinne einer Hydrosilylierung ausgeführt.

Wasserstoffsiloxane im Sinne dieser Erfindung sind Verbindungen der Formel (7)

Mₐ M^{H}ᵢ D_{d} D^{H}ₖ Tg Qₕ Formel (7)

wobei a, d, g, h und die Reste M, M^{H}, D, D^{H}, T und Q die zuvor definierten Bedeutungen haben,
i gleich eine Zahl von 0 bis 62, bevorzugt von 0 bis 42, insbesondere von größer 0 bis 5,
k eine Zahl von 0 bis 150, bevorzugt von 0 bis 100, mehr bevorzugt 0 bis 50, besonders bevorzugt größer 0 bis 30,
mit der Maßgabe, dass die Summe der Indizes i + k mindestens gleich 1 ist, bevorzugt größer 1 ist.
Wasserstoffsilane im Sinne dieser Erfindung sind Verbindungen der Formel (8)

R¹¹₃Si-H Formel (8)

Als SiH-Verbindungen (Wasserstoffsiloxane und/oder Wasserstoffsilane) können alle entsprechenden Verbindungen eingesetzt werden. Diese Verbindungen können wie im Stand der Technik beschrieben hergestellt werden.

Die SiH-Verbindungen werden in Bezug auf die SiH-Gruppen wahlweise stöchiometrisch, im molaren Über- oder Unterschuss bezogen auf die Methylidengruppen der methylidengruppensubstituierten Polyether eingesetzt. Das molare Verhältnis von Methylidengruppen zu SiH-Gruppen liegt vorzugsweise im Bereich von 0,8 - 1,5.

Hat die Summe der Indizes i und k in Formel (7) den Wert 1, weist also die Siloxankomponente nur eine SiH Funktion auf, so entstehen nach der Hydrosilylierung inverse Siliconpolyether, dadurch gekennzeichnet, dass die durch Formel (2) beschriebene Polyetherkette seitenständig siliconfunktionalisiert ist.

Nimmt die Summe aus den Indizes i und k Werte größer als 1 an, entstehen Siliconpolyether, deren Polyetherketten über Siliconeinheiten miteinander verknüpft sind. Diese Verbrückung von Polyetherketten kann bis zur Vernetzung, also dem Aufbau gelartiger oder fester Siliconpolyether führen:
Nimmt das Indexprodukt (a1 * m5) in Formel (5) Werte größer als 1 an und ist die Summe der Indizes i und k in Formel (7) größer als 1, entstehen verbrückte und/oder vernetzte Moleküle.

So können Polyether-Silicon-Verbindungen gewonnen werden, bei denen die mit Index m4 bezeichnete Struktureinheit mehrfach im Molekül enthalten ist. Die Produkte können dendritische Molekülstrukturen ausgehend von einem Polyether-Molekülteil annehmen. Sie können aber auch durch ein Polyether-Molekülteil verbrückte Silicone/Siloxane darstellen.

Ebenso können Silicon-Molekülteile, in denen die Summe der Indizes c und f größer 1 ist, mit mehreren Polyether-Molekülteilen verbunden sein. Die Produkte können dendritische Molekülstrukturen ausgehend von einem Silicon-Molekülteil annehmen. Sie können aber auch durch ein Silicon-Molekülteil verbrückte Polyether darstellen.

Wenn sowohl das Indexprodukt (a1 * m4) in Formel (2) bzw. das Indexprodukt (a1 * m5) in Formel (5) als auch die Summe der Indizes c und f in Formel (3) bzw. die Summe der Indizes i und k in Formel (7) Werte größer als 1 annehmen, dann können vernetzte Strukturen mit mehreren Silicon- und Polyethermolekülteilen entstehen.

Die so gebildeten Polyether-Silicon-Verbindungen weisen eine gelartige bis feste Konsistenz auf.

Die methylidensubstituierten Polyether enthalten Doppelbindungen, die hydrosilyliert werden können und dabei nicht isomerisieren. Die bekannte Allyl-PropenylUmlagerung als Nebenreaktion der Hydrosilylierung findet im erfindungsgemäßen Verfahren nicht statt.

Es kann vorteilhaft sein, das erfindungsgemäße Verfahren so auszuführen, dass die Methylidengruppen des Polyethers praktisch quantitativ mit den SiH Gruppen der Siloxan- und/oder Silankomponente zur Reaktion gebracht.

Weiterhin vorteilhaft sind Ausführungen, bei denen die erfindungsgemäßen Polyether-Silicon-Verbindungen keine freien SiH Gruppen mehr enthalten.

Es kann vorteilhaft sein, das erfindungsgemäße Verfahren so auszuführen, dass methylidensubstituierte Polyether-Silicon-Verbindungen entstehen, dadurch gekennzeichnet, dass methylidensubstituierte Polyether nur partiell im Sinne einer Hydrosilylierung mit reaktiven SiH Siloxanen umgesetzt werden.

Als Katalysatoren für die Hydrosilylierungsreaktion eignen sich prinzipiell Platinverbindungen wie beispielsweise Hexachloroplatinsäure, cis-Platin, Bis-(cycloocten)Platindichlorid, carbo-Platin, Platin(0)-(divinyltetramethyldisiloxan)-Komplexe, sogenannte Karstedt-Katalysatoren, oder auch mit unterschiedlichen Olefinen komplexierte Platin(0)-Komplexe. Des Weiteren eignen sich prinzipiell Rhodium-, Iridium- und Rutheniumverbindungen, wie beispielsweise Tris(triphenylphosphin)-Rhodium(I)chlorid oder Tris(triphenylphosphin)-Rhuthenium(II)dichlorid. Im Sinne des erfindungsgemäßen Verfahrens bevorzugte Katalysatoren sind Platin(0)-Komplexe, insbesondere bevorzugt sind Karstedt-Katalysatoren und sogenannte WK-Katalysatoren, die gemäß EP 1520870 (US 7,157,541) hergestellt werden.

Die Hydrosilylierungsreaktion kann im Eintopfverfahren oder im Zudosierverfahren, einstufig oder mehrstufig durchgeführt werden. Zur Kompatibilisierung der Reaktanden oder auch zur vereinfachten Handhabung hochviskoser bis fester Reaktanden kann die Reaktion in Lösungsmitteln wie beispielsweise Toluol oder Xylol durchgeführt werden. Die Reaktion kann ebenfalls lösungsmittelfrei in Form einer Emulsionspolymerisation durchgeführt werden. Großtechnisch kann die Hydrosilylierung sowohl im Rührkessel als klassischer Batch-Prozeß als auch im kontinuierlichen Prozess, wie beispielsweise in der EP 1013701 (US 6,291,622) beschrieben, gefahren werden.

Die Hydrosilylierkatalysatoren können als Feststoff oder in gelöster Form in das Reaktionsgemisch oder in einen der Reaktanden dosiert werden. Die eingesetzten Katalysatormengen liegen im Bereich von 1 bis 500 ppm, bevorzugt bei 1 bis 100 ppm und insbesondere bei 1 bis 30 ppm (Edel)Metall in den Komplexverbindungen bezogen auf die Summe aller Ausgangmaterialien.

Die Hydrosilylierung kann bei Temperaturen im Bereich von 20 bis 200 °C durchgeführt werden, bevorzugt bei 40 bis 150 °C und insbesondere bevorzugt bei 60 bis 120 °C. Der Reaktionsumsatz kann mittels gasvolumetrischer Bestimmung des siloxangebundenen Wasserstoffs erfolgen. Dabei wird eine Probe des Reaktionsgemisches in alkalischer Lösung zersetzt und der dadurch freigesetzte Wasserstoff an einer Gasbürette gemessen.

Die durch die Hydrosilylierung erhaltenen erfindungsgemäßen Polyether-Silicon-Verbindungen können in Abhängigkeit der verwendeten Edukte transparent oder milchig trüb sein. Die Viskositäten liegen bei Raumtemperatur im Bereich von 1 bis 100.000 mPa*s, bevorzugt von 1 bis 50.000 mPa*s und insbesondere bevorzugt von 1 bis 20.000 mPa*s.

Es kann vorteilhaft sein, in dem erfindungsgemäßen Verfahren der Hydroslilylierung einen zweiten Reaktionsschritt folgen zu lassen, dadurch gekennzeichnet, dass die Produkte der Hydrosilylierung in einer Äquilibrierungsreaktion unter Zusatz von cyclischen und/oder linearen Siloxanen (z.B. Octamethylcyclotetrasiloxan (D4) und/oder Decamethylcyclopentasiloxan (D5), die gegebenenfalls weitere funktionelle Gruppen, wie beispielsweise Aminogruppen, enthalten, zu Polyether-Silicon-Verbindungen mit längeren Siliconketten umgesetzt werden. Bevorzugt werden basische Katalysatoren wie zum Beispiel KOH, oder Tetramethylammoniumhydroxid eingesetzt gemäß dem beispielsweise in der DE 60116592 beschriebenen Stand der Technik. Die Produkte dieses zweiten Reaktionsschrittes können gegebenenfalls im statistischen Mittel weniger als ein Strukturelement der Formel (1) enthalten, bevorzugt mindestens 0,6, mehr bevorzugt mindestens 0,8 und insbesondere bevorzugt mindestens 0,9 Strukturelemente der Formel (1).

Gegenstand der vorliegenden Erfindung sind ebenfalls die nach dem erfindungsgemäßen Verfahren gewonnenen Polyether-Silicon-Verbindungen gemäß Formel (1). Das Merkmal aller Strukturen der erfinderischen Siliconpolyether ist das Strukturelement der Formel (1). Sie unterscheiden sich dadurch grundlegend von den im dargelegten Stand der Technik beschrieben Strukturen. Die Siloxaneinheiten sind über eine Methylenbrücke an die Polyetherkette chemisch angebunden. Die Zahl der Verknüpfungsstellen pro Polyetherkette wird durch das Indexprodukt (a1 * m4) in Formel (2) definiert.

Gegenstand der Erfindung sind weiterhin Zusammensetzungen enthaltend mindestens eine der erfindungsgemäßen Polyether-Silicon-Verbindungen der Formel (1). Bevorzugt sind erfindungsgemäße Zusammensetzungen unter Verwendung weiterer Zusätze. Bevorzugte Zusätze sind Silicontenside, organische Tenside, Lösungsmittel wie beispielsweise Alkane, halogenierte Alkane, substituierte oder unsubstituierte Aromaten, Ester, Ether, Glykole, Öle natürlicher und synthetischer Herkunft oder Polyether, Amine, Amide, Säuren, Basen oder deren Puffersysteme zur pH-Wert-Einstellung, Flammschutzmittel, Katalysatoren, Antioxidantien, Additive zur Steuerung der rheologischen Eigenschaften, wie beispielsweise Verdicker, Netzmittel oder Verlaufsmittel, Dispergieradditive, feste anorganische oder feste organische Füllstoffe, Partikel, Bindemittel, feste oder flüssige Farbstoffe, Stabilisatoren, UV-Absorber, Biozide und/oder Antistatika.

Gegenstand der Erfindung ist darüber hinaus die Verwendung der erfindungsgemäßen Polyether-Silicon-Verbindungen, Zusammensetzungen enthaltend mindestens eine der erfindungsgemäßen Polyether-Silicon-Verbindungen sowie die Verwendung der Produkte des erfindungsgemäßen Verfahrens als Tenside, Emulgatoren, Netz- und Dispergieradditive, Lackverlaufsmittel, Schmiermittel, als Textilhilfsmittel, zur Oberflächenbehandlung von Fasern, Garnen oder flächigen Textilprodukten, als Entschäumer, als Verdicker und Rheologiehilfsmittel, als kosmetische Additive und als Schaumstabilisatoren insbesondere im Polyurethan-Schaum.

Ein weiterer Gegenstand der Erfindung sind Kunststoffartikel, Werkstoffe, Kleb- und Dichtstoffe sowie Beschichtungsmittel enthaltend die erfindungsgemäßen Siliconpolyether.

Die erfindungsgemäßen Verbindungen und das erfindungsgemäße Verfahren, mit diesen erhältliche Zusammensetzugen sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden %-Angaben gemacht, so handelt es sich, wenn nicht anders angegeben, um Angaben in Gewichts-%. Bei Zusammensetzungen beziehen sich die %-Angaben wenn nicht anders angegeben auf die Gesamtzusammensetzung. Werden Mittelwerte angegeben, so handelt es sich, wenn nicht anders angegeben, um Zahlenmittel. Werden Molmassen verwendet, handelt es sich, wenn nicht ausdrücklich anders vermerkt um gewichtsmittlere Molmassen Mw. Werden im Umfang dieser Erfindung Werte für Viskositäten angegeben, handelt es sich falls nicht anders vermerkt um dynamische Viskositäten, die mit dem Fachmann geläufigen Methoden ermittelt werden können. Werden nachfolgend Messwerte angegeben, so wurden diese Messwerte, wenn nicht anders angegeben, bei einem Druck von 1013 hPa und einer Temperatur von 25 °C ermittelt.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Ausführungsbeispiele:

### Allgemeine Methoden und Materialien

GPC-Messungen zur Bestimmung der Polydispersität und mittleren Molmassen wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard (76 - 6000 g/mol).

OH-Zahlen wurden nach der Kaltacetylierungsmethode in Anlehnung an die Analysenvorschrift C-V 17A (98) der Deutschen Gesellschaft für Fettwissenschaft (DGF) durchgeführt.

Die Viskositäten wurden in Anlehnung an die DIN 53019 mit einem Rotationsviskosimeter der Marke Haake RV12 bei 25 °C gemessen.

NMR-spektroskopische Untersuchungen wurden mit einem Spektrometer der Firma Bruker durchgeführt: Das Verhältnis der M, D und T-Einheiten zueinander wurde per ²⁹Si-NMR-Spektroskopie bei einer Frequenz von 79,4 MHz, Analysen auf Methylidengruppen in den eingesetzten Methylidenpolyethern mittels ¹³C-NMR-Spektroskopie bei 100 MHz und der Umsatz nach Hydrosilylierung mit der ¹H-NMR-Methode bei 400 MHz bestimmt.

Es wurden folgende Methylidengruppen enthaltenden Polyether eingesetzt, die gemäß dem in DE 10 2001 076019 offenbarten Verfahren hergestellt wurden:

### Methylidenpolyether VP-1:

Fast farbloser, niedrig viskoser Polypropylenglykolmonobutylether der mittleren Molmasse M_{w} ca. 3300 g/mol, enthaltend im Mittel gemäß ¹³C NMR-Analyse 3,6 mol Methylidengruppen pro Molekül [(a1 * m5) = 3,6 in Formel (5)].

### Methylidenpolyether VP-2:

Leicht gelber, niedrig viskoser Polypropylenglykolmonobutylether der mittleren Molmasse M_{w} ca. 3400 g/mol, enthaltend im Mittel gemäß ¹³C NMR-Analyse 3,8 mol Methylidengruppen pro Molekül [(a1 * m5) = 3,8 in Formel (5)].

### Beispiel 1: Herstellung der erfindungsgemäßen Polyether-Silicon-Verbindungen:

### Synthesebeispiel S1:

Es wurden 21,8 g 1,1,1,3,5,5,5-Heptamethyltrisiloxan und 70,0 g Methylidenpolyether VP-1 miteinander gemischt. Die Edukte wurde auf 70 °C erwärmt und mit 91,8 mg einer Lösung des Karstedt-Katalysators in Decamethylcyclopentasiloxan (w (Pt) = 1,0 %) versetzt. Das Reaktionsgemisch wurde für 2,5 Stunden bei 70 °C gerührt und anschließend drei Stunden lang bei 130 °C bei einem Vakuum von < 1 mbar von flüchtigen Bestandteilen befreit. Es wurde eine klare gelbliche Flüssigkeit erhalten. Freie Methylidengruppen sind im ¹³C- und ¹H-NMR-Spektrum nicht nachweisbar. Lt. ²⁹Si-NMR-Analyse beträgt das molare Verhältnis von M zu D^{PE} 2 zu 1.

### Synthesebeispiel S2:

Es wurden 51,1 g eines Siloxans, welches eine Molmassenerteilung aufweist und sich im Mittel aus 6 Si-Einheiten gemäß der allgemeinen Formel Me₃SiO[SiMe₂O]₃[SiHMeO]₁SiMe₃ zusammensetzt, und 80,0 g Methylidenpolyether VP-2 miteinander gemischt. Die Mischung der Edukte wurde auf 80 °C erhitzt und mit 131 mg einer Lösung des Karstedt-Katalysators in Decamethylcyclopentasiloxan (w (Pt) = 1,0 %) versetzt. Das Reaktionsgemisch wurde für 2,5 Stunden bei 100 °C gerührt. Nach dieser Zeit wurde ein Gel erhalten. Die Bestandteile des Siloxans, die mehr als eine SiHMeO-Einheit in der Molekülkette enthalten, führen zu Molmassenaufbau und teilweiser Vernetzung.

### Synthesebeispiel S3:

Es wurden 25 g des Produktes aus Beispiel S1 mit 5 g Decamethylcyclopentasiloxan und 0,03 g Tetramethylammoniumhydroxid Pentahydrat versetzt. Das Gemisch wurde sechs Stunden lang bei 70 °C gerührt. Es wurde ein klares flüssiges Produkt erhalten.

Freie Methylidengruppen sind im ¹³C-NMR-Spektrum nicht nachweisbar. Lt. ²⁹Si-NMR-Analyse beträgt das molare Verhältnis von M zu D zu D^{PE} 2 zu 3,2 zu 0,9

### Beispiel 2: Messungen der Oberflächenspannung:

Messungen nach der Pendant-Drop-Methode wurden mit dem Geräte Dataphysics OCA 20 bei 25 °C an unverdünnten Proben vorgenommen. Die folgenden Werte der Oberflächenspannung wurden mit der zugehörigen Bilderkennungssoftware aus der Tropfenform rechnerisch ermittelt.

| | |
|---|---|
| Methylidenpolyether VP-2: | 31,5 mN/m |
| Synthesebeispiel S1: | 24,5 mN/m |
| Synthesebeispiel S3: | 21,0 mN/m |

## Patentansprüche

1. Polyether-Silicon-Verbindungen, deren Verknüpfung von Polyether-Backbone und einem Siliziumatom aus einer Methylengruppe besteht.

2. Polyether-Silicon-Verbindungen nach Anspruch 1 **dadurch gekennzeichnet, dass** die Polyether-Silicon-Verbindungen das Strukturelement der Formel (1) 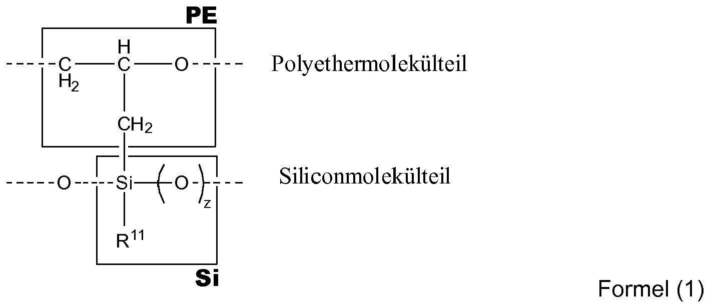 enthalten, wobei der Polyether-Molekülteil durch Formel (2) beschrieben wird
A-[O-(R¹)ₙ-(R²)ₒ-(R³)ₚ-(R⁴)ₘ₁-(R⁵)ₘ₂-(R⁶)ₘ₃-(R⁷)ₘ₄-R⁸]ₐ₁ Formel (2)
a1 gleich 1 bis 8,
A entweder Wasserstoff oder ein organischer Rest einer organischen Startverbindung und in diesem Falle ein mindestens ein Kohlenstoffatom aufweisender Rest ist,
(a1 * n) gleich 0 bis 200 ist,
(a1 * o) gleich 1 bis 1000 ist,
(a1 * p) gleich 0 bis 150 ist,
(a1 * m1) gleich kleiner 50 ist
(a1 * m2) gleich kleiner 50 ist,
(a1 * m3) gleich kleiner 30 ist,
(a1 * m4) gleich 1 bis 50 ist,
mit der Maßgabe, dass die Summe der Indexprodukte a1 * (n + o + p + m1 + m2 + m3 + m4) mindestens gleich 3 ist,
R¹ = -CH₂CH₂O-
R² = -CH₂CH(CH₃)O- oder -CH(CH₃)CH₂O-
R³ = -CH₂CHRO- oder - CHRCH₂O-
R⁴ = -CH₂CH(CH₂OH)O- oder -CH(CH₂OH)CH₂O-
R⁵ = -CH₂CH(CH₂Cl)O- oder -CH(CH₂Cl)CHO-
R⁶ = -CH₂C(=CH₂)O- oder -C(=CH₂)CH₂O-
R⁷ = ein Strukturelement der Formel (1), bestehend aus dem Molekülteil enthaltend die Atome des Kastens mit dem Zeichen PE
R⁸ = unabhängig voneinander Wasserstoff oder eine Alkylgruppe mit 1-18 C-Atomen oder eine Gruppe R-C(=O)- ist,
R unabhängig voneinander entweder eine Alkylgruppe mit 1-18 C-Atomen oder ein aromatischer Rest, insbesondere eine Methylgruppe, eine Ethyl-gruppe oder ein Phenylrest ist,
wobei der Silicon-Molekülteil durch Formel (3) oder Formel (4) beschrieben wird
Mₐ M^{H}_{b} M^{PE}_{c} Dd D^{H}ₑ D^{PE}_{f} Tg Qₕ Formel (3)
wobei
a eine Zahl von 0 bis 42,
b eine Zahl von 0 bis 20,
c eine Zahl von 0 bis 42,
d eine Zahl von 0 bis 500,
e eine Zahl von 0 bis 100,
f eine Zahl von 0 bis 50,
g eine Zahl von 0 bis 50,
h eine Zahl von 0 bis 50,
z gleich 0 oder 1 ist,
mit der Maßgabe, dass a + b + c gleich oder größer 2 ist und mit der Maßgabe, dass c + f mindestens 1 bis 92,
und wobei
M dem Strukturelement [R¹¹₃SiO_{1/2}],
M^{H} dem Strukturelement [R¹¹₂SiHO_{1/2}],
M^{PE} ein Strukturelement der Formel (1), bestehend aus dem Molekülteil enthaltend die Atome des Kastens mit dem Zeichen Si, wobei die in Formel (1) freie Valenz, durch die gestrichelt gezeichnete Bindung (zwischen dem Siliziumatom und dem Sauerstoffatom außerhalb des Kastens) dargestellt, mit einem Rest R¹¹ abgesättigt ist,
D dem Strukturelement [R¹¹₂SiO_{2/2}],
D^{H} dem Strukturelement [R¹¹SiHO_{2/2}],
D^{PE} ein Strukturelement der Formel (1), bestehend aus dem Molekülteil enthaltend die Atome des Kastens mit dem Zeichen Si, wobei die in Formel (1) freie Valenz, durch die gestrichelt gezeichnete Bindung (vom Sauerstoffatom mit dem Index z nach außerhalb des Kastens führend) dargestellt, mit einem weiteren Strukturelement der Formel (3) verbunden ist,
T dem Strukturelement [R¹¹SiO_{3/2}],
Q dem Strukturelement [SiO_{4/2}] entspricht,
R¹¹ unabhängig voneinander gleiche oder verschiedene Alkylreste mit 1 bis 30 Kohlenstoffatomen, oder gleiche oder verschiedene Arylreste mit 6 - 30 Kohlenstoffatomen oder -OH oder -OR¹²,
R¹² gleiche oder verschiedene Alkylreste mit 1 bis 30 Kohlenstoffatomen, oder gleiche oder verschiedene Arylreste mit 6 - 30 Kohlenstoffatomen,
R¹¹₃Si- Formel (4)
wobei R¹¹ wie vorstehend definiert ist und die Bindung die Bindung zum Polyethermolekülteil darstellt.

3. Polyether-Silicon-Verbindungen nach Anspruch 2 **dadurch gekennzeichnet, dass** die Polyether-Silicon-Verbindungen enthaltend das Strukturelement der Formel (1), einen Polyether-Molekülteil der Formel (2) enthalten, in dem
a1 gleich 1
A der organische Rest von Butanol,
(a1 * n) gleich 0,
(a1 * o) gleich 30 bis 100,
(a1 * p) gleich 0,
(a1 * m1) gleich 0 bis kleiner 1,
(a1 * m2) gleich 0 bis kleiner 1,
(a1 * m3) gleich 0 bis kleiner 1,
(a1 * m4) gleich 1 bis 5 ist,
mit der Maßgabe, dass die Summe der Indexprodukte a1 * (n + o + p + m1 + m2 + m3 + m4) mindestens gleich 3 ist,
die Reste R¹, R², R³, R⁴, R⁵, R⁶, R⁷, R⁸ und R sind wie oben bereits definiert, und dass die Polyether-Silicon-Verbindungen der Formel (1) einen Silicon-Molekülteil der Formel (3) oder Formel (4) enthalten, in dem
a von 0 bis kleiner 2,
b von 0 bis kleiner 3,
c von 0 bis kleiner 3,
d von 0 bis 100,
e von 0 bis 2,
f von 0 bis 10,
g von 0 bis kleiner 3,
h von 0 bis kleiner 3,
z 1 ist,
mit der Maßgabe, dass a + b + c gleich oder größer 2 ist und mit der Maßgabe, dass c + f mindestens 1 bis 10,
die Reste M, M^{H}_{b}, M^{PE}_{c}, D_{d}, D^{H}ₑ, D^{PE}_{f}, Tg, Qₕ sind wie oben bereits definiert R¹¹ Methyl,
R¹² gleiche oder verschiedene Alkylreste mit 1 bis 8 Kohlenstoffatomen oder Phenylreste sind,
wobei die Definition für R¹¹ in Formel (4) ebenfalls gültig ist. ist.

4. Verfahren zur Herstellung von Polyether-Silicon-Verbindungen, deren Verknüpfung von Polyether-Backbone und einem Siliziumatom aus einer Methylengruppe besteht, indem ein methylidensubstituierter Polyether mit einer SiH-Verbindung umgesetzt wird.

5. Verfahren nach Anspruch 4 **dadurch gekennzeichnet, dass** ein methylidensubstituierter Polyether der Formel (5)
A-[O-(R¹)ₙ-(R²)ₒ-(R³)ₚ-(R⁴)ₘ₁-(R⁵)ₘ₂-(R⁶)ₘ₅-R⁸]ₐ₁ Formel (5)
wobei
a1, (a1 * n), (a1 * o), (a1 * p), (a1 * m1), (a1 * m2), die zuvor definierten Bedeutungen haben,
(a1 * m5) gleich 1 bis 80, bevorzugt größer als 1 bis 50, mehr bevorzugt gleich 2 bis 30, besonders bevorzugt größer 2 bis kleiner als 20 ist,
A der organische Rest der Verbindung der Formel (6)
A -(OH)ₐ₁ Formel (6)
ohne die OH-Gruppe ist,
mit einer SiH-Verbindung der Formel (7)
Mₐ M^{H}ᵢ D_{d} D^{H}ₖ Tg Qₕ Formel (7)
wobei
a, d, g, h und die Reste M, M^{H}, D, D^{H}, T und Q die zuvor definierten Bedeutungen haben,
i gleich eine Zahl von 0 bis 62, bevorzugt von 0 bis 42, insbesondere von 0 bis 5 ist,
k eine Zahl von 0 bis 150, bevorzugt von 0 bis 100, weiter bevorzugt 0 bis 50, besonders bevorzugt 0 bis 30 ist,
mit der Maßgabe, dass die Summe der Indizes i + k mindestens gleich 1 ist, oder einer SiH-Verbindung der Formel (8)
R¹¹₃Si-H Formel (8)
wobei R¹¹ wie vorstehend definiert ist
umgesetzt wird.

6. Zusammensetzungen enthaltend mindestens eine der erfindungsgemäßen Polyether-Silicon-Verbindungen der Formel (1).

7. Zusammensetzungen nach Anspruch 6 **dadurch gekennzeichnet, dass** die Zusammensetzung weitere Zusätze enthält.

8. Zusammensetzungen nach Anspruch 6 **dadurch gekennzeichnet, dass** mindestens ein Zusatz ausgewählt ist aus der Gruppe Silicontenside, organische Tenside, Lösungsmittel, Säuren, Basen oder deren Puffersysteme zur pH-Wert-Einstellung, Flammschutzmittel, Katalysatoren, Antioxidantien, Additive zur Steuerung der rheologischen Eigenschaften, Dispergieradditive, feste anorganische oder feste organische Füllstoffe, Partikel, Bindemittel, feste oder flüssige Farbstoffe, Stabilisatoren, UV-Absorber, Biozide und/oder Antistatika.

9. Verwendung der Polyether-Silicon-Verbindungen gemäß Formel (1), Zusammensetzungen enthaltend mindestens eine der Polyether-Silicon-Verbindungen gemäß Formel (1), sowie die Verwendung der Produkte des erfindungsgemäßen Verfahrens nach Anspruch 6 als Tenside, Emulgatoren, Netz- und Dispergieradditive, Lackverlaufsmittel, Schmiermittel, als Textilhilfsmittel, zur Oberflächenbehandlung von Fasern, Garnen oder flächigen Textilprodukten, als Entschäumer, als Verdicker und Rheologiehilfsmittel, als kosmetische Additive und als Schaumstabilisatoren insbesondere im Polyurethan-Schaum, als Kunststoffartikel, Werkstoffe, Klebstoffe, Dichtstoffe, Binde- und Beschichtungsmittel.
